# EUROPEAN PATENT APPLICATION

(11) **EP 3 597 917 A1**
(43) Date of publication of application: **22.01.2020**
(21) Application number: 19187421.3
(22) Date of filing: 19.07.2019
(51) Int. Cl.: F04C 2/08, F04C 2/10, F04C 2/18, F04C 15/00

(54) **SHAPE MEMORY ALLOY COATING USING ADDITIVE MANUFACTURING**

(30) Priority: 20.07.2018 US 201816041604
(71) Applicant: Hamilton Sundstrand Corporation, Charlotte, NC 28217-4578 (US)
(72) Inventor: POTEET, Steven, Hamden, CT 6518 (US); GIULIETTI, Diana, Manchester, CT 06040 (US)
(74) Representative: Dehns

(57) **Abstract**

A gear pump (100) can include at least one gear (101) having a plurality of gear teeth (103). At least the plurality of gear teeth (103) can be additively manufactured and can include a substrate (105) and a pitting resistant outer coating (107) additively manufactured on the substrate (105) and configured to prevent pitting due to cavitation. The substrate (105) can include a substrate material and the pitting resistant outer coating (107) includes a pitting resistant material different than the substrate material. The pitting resistant outer coating (107) defines an outer surface layer (109) of the gear teeth (103).

## Description

### BACKGROUND

### 1. Field

The present disclosure relates to additive manufacturing, more specifically to shape memory materials (e.g., NiTi).

### 2. Description of Related Art

Parts in extreme conditions may be subject to degradation of the material used, such as cavitation of steel gears in a fuel pump. Alloys, specifically shape memory alloys (SMA), have been identified as superior candidates towards cavitation erosion, however, they are expensive and difficult to manufacture. SMA coatings could be applied to the substrate material, but they suffer from a knockdown in performance compared to the bulk alloy and interface issues with the substrate.

Such conventional methods and systems have generally been considered satisfactory for their intended purpose. However, there is still a need in the art for improved parts utilizing shape memory alloys. The present disclosure provides a solution for this need.

### SUMMARY

A gear pump can include at least one gear having a plurality of gear teeth. At least the plurality of gear teeth can be additively manufactured and can include a substrate and a pitting resistant outer coating additively manufactured on the substrate and configured to prevent pitting due to cavitation. The substrate can include a substrate material and the pitting resistant outer coating includes a pitting resistant material different than the substrate material. The pitting resistant outer coating defines an outer surface layer of the gear teeth.

The pitting resistant outer coating can include a mixture section that includes a composition having a mixture of the substrate material and the pitting resistant material additively manufactured together. The mixture section can be a gradient, for example, or any other suitable constant or variable mixture. The gradient can include an increasing concentration of the pitting resistant material toward the outer surface layer from the substrate.

In certain embodiments, the outer surface layer defined by the pitting resistant outer coating may only include pitting resistant material. The outer surface layer can be about 20 microns thick or more, for example, or any other suitable thickness. In certain embodiments, the gradient can be about 50 microns thick or more.

The pitting resistant material can include a shape memory alloy. For example, the shape memory alloy can be or include NiTi (Nitinol). The substrate material can be steel.

In accordance with at least one aspect of this disclosure, a method can include additively manufacturing a pitting resistant outer coating on a substrate that is made of a substrate material to form a gear for a gear pump. Additively manufacturing can include adding a powder of a pitting resistant material to a powder of the substrate material during additive manufacturing, and successively increasing a concentration of the pitting resistant material in successive additive layers to create a gradient extending from the substrate toward an outer surface layer of the pitting resistant outer coating.

Increasing the concentration can include increasing the concentration to pure pitting resistant material after creating the gradient to create the outer surface layer. The pitting resistant material can be or include NiT or any other suitable material. The substrate material can be steel.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a cross-sectional schematic view of an embodiment of a gear pump in accordance with this disclosure;
Fig. 2 is a partial cross-sectional view of an embodiment of a gear in accordance with this disclosure, e.g., as shown in Fig. 1;
Fig. 3 is a cross-sectional, isolated view of an embodiment of an embodiment of a gear tooth of the gear of Fig. 2;
Fig. 4 is a cross-sectional view of the gear tooth of Fig. 3, taken along line 4-4.

### DETAILED DESCRIPTION

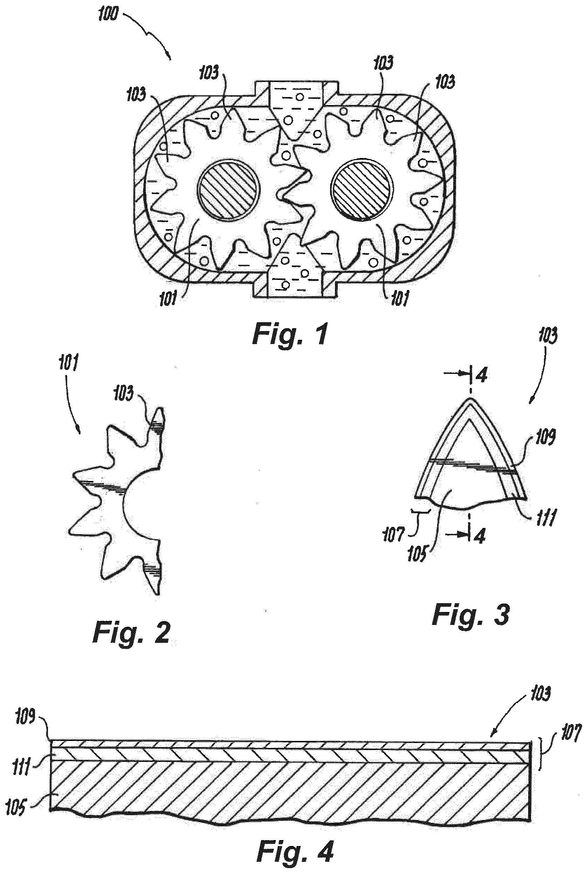

Reference will now be made to the drawings wherein like reference numerals identify similar structural features or aspects of the subject disclosure. For purposes of explanation and illustration, and not limitation, an illustrative view of an embodiment of a gear pump in accordance with the disclosure is shown in Fig. 1 and is designated generally by reference character 100. Other embodiments and/or aspects of this disclosure are shown in Figs. 2-4. The systems and methods described herein can be used to increase lifetime of gears in a gear pump, for example, and reducing the cost of such higher lifetime parts.

Referring to Fig. 1, a gear pump 100 can include at least one gear 101 having a plurality of gear teeth 103. Referring to Figs. 2 and 3, at least the plurality of gear teeth 103 of the gear 101 can be additively manufactured and can include a substrate 105 and a pitting resistant outer coating 107 additively manufactured on the substrate 105. The pitting resistant outer coating 107 can be configured to prevent pitting due to cavitation in the gear pump (e.g., from gas formation). The substrate 105 can include a substrate material and the pitting resistant outer coating 107 includes a pitting resistant material different than the substrate material. The pitting resistant outer coating 107 defines an outer surface layer 109 of the gear teeth 103.

The pitting resistant outer coating 107 can include a mixture section 111 that includes a composition having a mixture of the substrate material and the pitting resistant material 105 additively manufactured together. The mixture section 111 can be a gradient (e.g., as shown in Fig. 4), for example, or any other suitable constant or variable mixture. The gradient can include an increasing concentration of the pitting resistant material toward the outer surface layer 109 from the substrate 105.

In certain embodiments, the outer surface layer defined by the pitting resistant outer coating 107 may only include a pure pitting resistant material as shown, or any other suitable composition. The outer surface layer can be about 20 microns thick of pure pitting resistant material, for example, or any other suitable thickness. For example, a final ten additive layers may be pure pitting resistant material in certain embodiments. It is contemplated that the outer surface layer 109 may also be the mixture layer 111 such that no layer having pure pitting resistant material is included.

In certain embodiments, the mixture layer 111 and/or the gradient can be about 50 microns thick or more. However, it is contemplated that the mixture layer 111 and/or the gradient may be any suitable size (e.g., less than the outer surface layer 109 thickness). For example, the mixture layer 111 may be only 1, 2, 3, 4, or 5 additive layers thick, or any other suitable number of additive layers. One having ordinary skill in the art knows the thickness of an additive layer based on the method and machine used for additive manufacturing, and the number of additive layers may change as a function of the thickness thereof. For example, the mixture layer 111 may only be about 1 to about 2 microns thick.

The pitting resistant material of the coating 107 can include a shape memory alloy. For example, the shape memory alloy can be or include NiTi (Nitinol). The substrate material of the substrate 105 (and/or used in the mixture layer 111) can be steel, for example, or any other suitable material.

It is contemplated that the outer surface coating 107 can be applied to any suitable portion(s) of the gear 101 (e.g., the forward and back faces of gear teeth 103 and/or the sides of teeth 103), or to the entirety of the gear 101. In certain embodiments, only the gear teeth 103 or one or more portions thereof may include the outer surface coating 107. In certain embodiments, only a forward face (a side facing the direction of motion) or a rear face (the opposite side of the forward face) of the gear teeth 103 can include the outer surface coating 107. It is contemplated that the outer surface coating 107 may be non-uniform in thickness as a function of location on the gear teeth 103 (e.g., to provide greater resistance at known cavitation damage spots).

In accordance with at least one aspect of this disclosure, a method can include additively manufacturing a pitting resistant outer coating 107 on a substrate 105 that is made of a substrate material to form a gear 103 for a gear pump 100. Additively manufacturing can include adding a powder of a pitting resistant material to a powder of the substrate material during additive manufacturing, and successively increasing a concentration of the pitting resistant material in successive additive layers to create a gradient extending from the substrate toward an outer surface layer of the pitting resistant outer coating.

Increasing the concentration can include increasing the concentration to pure pitting resistant material after creating the gradient to create the outer surface layer. As described above, the pitting resistant material can be or include NiT or any other suitable material and the substrate material can be steel, and/or any other suitable materials. Any suitable additive manufacturing method is contemplated herein (e.g., direct energy deposition or any other suitable similar method, could use powder or wire filament).

Embodiments eliminate a stark interface between a substrate material and a pitting resistant coating to make the material more homogeneous. Embodiments of gradient additive manufacturing using direct energy deposition provides a method of building a part mostly of a low cost material, e.g., an alloy such as steel, while building the outer most layers (e.g., about 5 to about 10 additive layers) out of a different material, e.g., such as a shape memory alloy (i.e. NiTi). Embodiments can keep costs to a minimum but allow the part to function as if it were mostly made of the shape memory bulk alloy. The first selected material can be used to build the bulk of the part, and the system would be switched to accommodate a second selected material (in this case, NiTi), e.g., in the final steps of the build process.

Nitinol (NiTi) is a shape memory alloy (SMA) that is very wear resistant, hard, and elastic. Nitinol can be beneficial towards high energy uses such as pumps that experience cavitation to absorb shockwaves that impact the surface. For example, the maximum recoverable strain these materials can hold without permanent damage is up to about 8% for some alloys, compared to a maximum strain of about 0.5% for conventional steels. Embodiments provide at least an order of magnitude greater cavitation resistance. As described above, only outer surface layers and sides of the teeth may be NiTi in certain embodiments, and the rest of gear (e.g., the part that sits in bearings) can be a cheaper material, e.g., steel. For example, less than of the 10% additive build can use NiTi for performance, and greater than 90% of the additive build can use a low cost material.

Cavitation (bubbles formed by depressurized fuel, for example) causes implosive forces on teeth which erodes the material. Cavitation on nitrided CPM10V steel causes severe pitting of gear teeth. Cavitation is caused by micro-implosions on the surface of a material at forces up to 1000 MPa. This causes extreme wear and premature part replacement. Embodiments reduce the cavitation rate of gear pumps and thereby significantly increase the lifetime of the part reducing costs to the organization. In certain embodiments, by manufacturing mostly from steel, the benefits of SMA can still be achieved while avoiding the costs traditionally met when manufacturing from a SMA alone. Using the AM process to create a gradient between the cheaper base material and the SMA coating can eliminates any issues of interface failures as well. Embodiments reduce wear degradation due to film interface issues.

Any suitable combination(s) of any disclosed embodiments and/or any suitable portion(s) thereof are contemplated herein as appreciated by those having ordinary skill in the art.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the subject disclosure.

## Claims

1. A gear (101) for a gear pump (100), comprising:
a plurality of gear teeth (103), at least the plurality of gear teeth (103) being additively manufactured and comprising:
a substrate (105); and
a pitting resistant outer coating (107) additively manufactured on the substrate (105) and configured to prevent pitting due to cavitation,
wherein the substrate (105) includes a substrate material and the pitting resistant outer coating (107) includes a pitting resistant material different than the substrate material, wherein the pitting resistant outer coating (107) defines an outer surface layer (109) of the gear teeth (103).

2. The gear of claim 1, wherein the pitting resistant outer coating (107) further comprises a mixture section (111) that includes a composition having a mixture of the substrate material and the pitting resistant material additively manufactured together.

3. The gear of claim 2, wherein the mixture section (111) is a gradient.

4. The gear of claim 3, wherein the gradient includes an increasing concentration of the pitting resistant material toward the outer surface layer from the substrate.

5. The gear of claim 4, wherein at least the outer surface layer (109) defined by the pitting resistant outer coating (107) only includes pitting resistant material.

6. A gear pump (100), comprising:
at least one gear as claimed in any preceding claim.

7. The gear pump of claim 6, wherein the outer surface layer (109) is about 20 microns thick or more, and preferably wherein the gradient is about 50 microns thick or more.

8. The gear pump of claim 6, wherein the pitting resistant material includes a shape memory alloy.

9. The gear pump of claim 8, wherein the shape memory alloy includes NiTi.

10. The gear pump of claim 9, wherein the substrate material is steel.

11. A method, comprising:
additively manufacturing a pitting resistant outer coating on a substrate that is made of a substrate material to form a gear for a gear pump.

12. The method of claim 11, wherein additively manufacturing includes adding a powder of a pitting resistant material to a powder of the substrate material during additive manufacturing, and successively increasing a concentration of the pitting resistant material in successive additive layers to create a gradient extending from the substrate toward an outer surface layer of the pitting resistant outer coating.

13. The method of claim 12, wherein increasing the concentration includes increasing the concentration to pure pitting resistant material after creating the gradient to create the outer surface layer.

14. The method of claim 12, wherein the pitting resistant material is NiTi.

15. The method of claim 12, wherein the substrate material is steel.
